# FASCICULE DE BREVET EUROPEEN

(11) **EP 2 098 773 B1**
(45) Date de publication et mention de la délivrance du brevet: **07.09.2011**
(21) Numéro de dépôt: 09154127.6
(22) Date de dépôt: 02.03.2009
(51) Int. Cl.: F16L 41/02, F16L 23/026, F28D 7/02

(54) **Bride de dérivation, dispositif de dérivation comprenant un tuyau principal et ladite bride de dérivation et procédé de raccordement par soudage d'une telle bride de dérivation**
Abzweigflansch, Abzweigvorrichtung umfassend ein Hauptrohr und besagter Abzweigsflansch, und Anschlussverfahren eines solchen Abzweigungsflansches durch Schweissen
Branching flange, branching device comprising a main tube and said branching flange and method of connecting such a branching flange by welding

(30) Priorité: 04.03.2008 FR 0851388
(43) Date de publication de la demande: 09.09.2009
(73) Titulaire: SNECMA, 75015 Paris (FR)
(72) Inventeur: Bucher, Bruno, 27340, PONT DE L'ARCHE (FR); Pomies, Claude, 78200, MAGNANVILLE (FR); Chauvin, André, 78520, SAINT MARTIN LA GARENNE (FR); Beauverger, Philippe, 27950, SAINT JUST (FR)
(74) Mandataire: Cardy, Sophie Marie

(56) Documents cités:
- DE-U1- 8 523 497
- FR-A- 1 414 179
- US-A- 5 564 753
- US-A1- 2002 195 426

## Description

L'invention concerne une bride de dérivation destinée à être raccordée à au moins un tuyau principal, un dispositif de dérivation comprenant un tuyau principal et ladite bride de dérivation, ainsi qu'un procédé de raccordement par soudage entre un tuyau principal et au moins une bride de dérivation.

L'installation d'une dérivation sur un tuyau principal est un point délicat notamment quand il s'agit d'une dérivation formant un échangeur thermique avec le fluide traversant le tuyau principal, avec des écarts de température importants entre le fluide traversant le tuyau principal et le fluide de la dérivation.

Dans le cas d'applications astronautiques pour des moteurs-fusées dans lesquels l'alimentation du moteur en ergols à haute pression se fait par des turbopompes, un tel échangeur thermique, alors dénommé échangeur thermique chaud, peut consister à réchauffer l'hélium liquide entrant à une température de -263°C jusqu'à une température de sortie proche de 20°C pour les besoins de fonctionnement du moteur cryogénique.

Dans ces conditions, on comprend que la dérivation, et en particulier la bride montée sur le tuyau principal pour former cette dérivation, doit résister à des températures extrêmes, et à des écarts de températures engendrant des dilatations, voire des modifications structurelles du matériau constituant les pièces de la dérivation, ce qui peut fragiliser la liaison mécanique entre ces pièces.

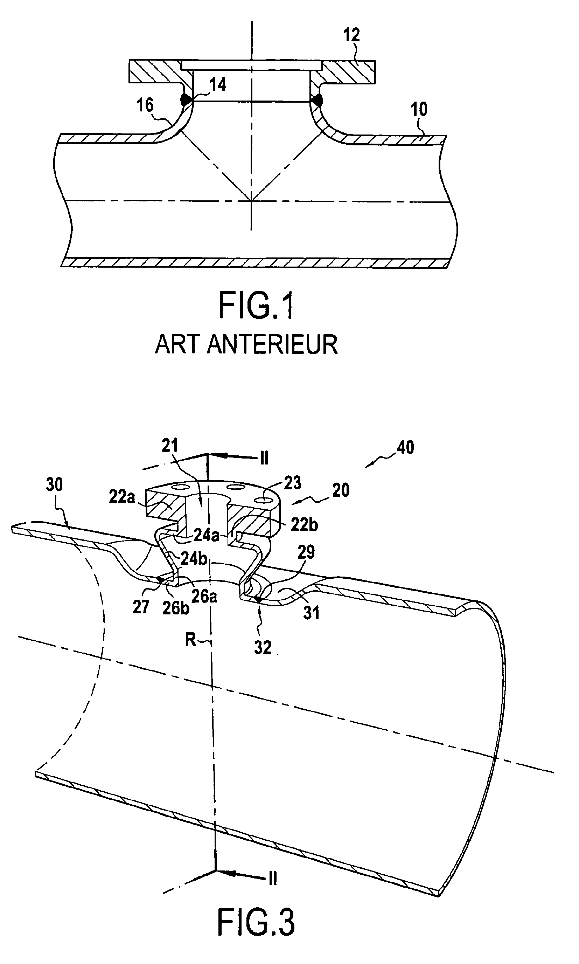

Habituellement, comme il apparaît sur la figure 1, pour réaliser la dérivation sur le tuyau principal 10 on utilise une bride annulaire 12 montée par soudage sur l'ouverture circulaire 14 d'un collet 16 réalisé dans la paroi du tuyau principal 10. Cette ouverture 14 sur laquelle on va réaliser la dérivation du tuyau principal 10 est différente des ouvertures formées à chaque extrémité du tuyau principal.

A cet effet, le collet 16 est réalisé par les techniques de chaudronnage, c'est-à-dire par déformation de la tôle constituant la paroi du tuyau principal 10. Plus précisément, on utilise des outils rotatifs qui réalisent successivement une opération de perçage et de découpe d'un orifice elliptique, une opération d'étirement transversal de la matière entourant cet orifice afin de constituer le collet 16, puis une opération de tournage avec couteaux rotatifs pour obtenir la forme définitive du collet 16 et son ouverture circulaire 14.

Cependant, en particulier du fait de l'étirement de matière opéré pour former le collet 16, il existe un amincissement de la tôle au niveau du collet. Ce collet 16 est par ailleurs soumis à une concentration de contraintes dues à la pression des fluides et aux efforts extérieurs, ce qui entraîne des déformations thermiques se manifestant sous la forme d'une plastification et donc la perte des qualités élastiques permettant à la dérivation de garder son intégrité au cours des cycles successifs.

On comprend que la modification des qualités de cette zone engendre une fragilisation et des risques de ruptures qui sont inacceptables.

Les documents US 5,564,753, US 2002/0195426 A1, FR 1414179 et DE 8523497 U1 montrent des brides de dérivation connues.

La présente invention a pour objectif de fournir une solution permettant de surmonter les inconvénients de l'art antérieur et en particulier de réaliser la dérivation selon une technique qui permette à la dérivation de supporter les sollicitations thermique et mécanique de fonctionnement auxquelles sont soumises la bride et le tuyau principal.

A cet effet, selon la présente invention, la bride de dérivation destinée à être raccordée à au moins un tuyau principal est caractérisée par l'objet de la revendication 1.

De cette manière, on comprend que la bride de fixation est destinée à la liaison entre un ou plusieurs tuyau(x) principal(aux) avec un ou plusieurs tuyau(x) secondaire(s) ou toute autre pièce de raccordement. De façon caractéristique, le tronçon intermédiaire présentant la forme d'un pli de soufflet, il permet de réaliser l'absorption des dilatations différentielles, en constituant un assouplissement axial et radial de la bride.

Cette solution présente aussi l'avantage supplémentaire, de permettre, grâce au contour circulaire plan de l'extrémité libre, un soudage selon une forme simple, ce qui garantit un cordon de soudure homogène.

La forme en pli de soufflet du tronçon intermédiaire signifie qu'entre la première paroi et la deuxième paroi du tronçon intermédiaire, il existe un angle droit ou préférentiellement un angle aigu en direction du passage intérieur. Cette forme concave peut également s'obtenir par un tronçon intermédiaire formé de plus de deux parois, chaque paire de parois consécutives en direction axial délimitant entre elles un angle droit ou préférentiellement un angle aigu en direction du passage intérieur.

Les configurations géométriques de la première paroi et de la deuxième paroi du tronçon intermédiaire qui permettent cette forme en pli de soufflet, sont les suivantes :
- la première paroi du tronçon intermédiaire forme une paroi annulaire s'étendant vers l'extérieur depuis le tronçon arrière et la deuxième paroi du tronçon intermédiaire forme une paroi annulaire entre la première paroi du tronçon intermédiaire et le tronçon avant ;
- la première paroi du tronçon intermédiaire forme une paroi annulaire s'étendant vers l'extérieur en direction radiale depuis le tronçon arrière ou bien la première paroi du tronçon intermédiaire forme une paroi annulaire allant en s'élargissant en direction axiale depuis le tronçon arrière, c'est-à-dire qu'elle forme un élargissement annulaire depuis le tronçon arrière ;
- la deuxième paroi du tronçon intermédiaire forme un rétrécissement annulaire depuis la première paroi du tronçon intermédiaire en direction du tronçon avant, c'est-à-dire qu'elle forme une paroi annulaire allant en se rétrécissant en direction axiale depuis le tronçon arrière, ou bien la deuxième paroi du tronçon intermédiaire forme un passage annulaire s'étendant axialement entre la première paroi du tronçon intermédiaire et le tronçon avant (la deuxième paroi du tronçon intermédiaire constituant alors un cylindre de section circulaire).

En outre, de préférence, les parois du tronçon intermédiaire et du tronçon avant présentent une épaisseur sensiblement constante, et notamment plus faible que l'épaisseur des parois du tronçon arrière, ce qui permet à toute la portion de la bride formée du tronçon intermédiaire et du tronçon avant, qui est reliée au tuyau principal, de former la zone d'assouplissement axial et radial de la bride.

Egalement, la présente invention porte sur un dispositif de dérivation entre au moins un tuyau principal et au moins un tuyau secondaire, comprenant :
- un tuyau principal dont la paroi présente une ouverture circulaire plane non coaxiale au tuyau principale et au moins une bride de dérivation selon au moins la revendication 1, l'extrémité libre de ladite bride de dérivation présentant le même diamètre que le diamètre de l'ouverture du tuyau principal et ladite extrémité libre étant montée par soudage plan le long de ladite ouverture circulaire.

Globalement, grâce à la solution selon la présente invention, il est possible de fournir une bride qui réalise une dérivation avec un tuyau principal, ladite dérivation non seulement n'étant pas fragilisée par son procédé d'obtention, mais en outre pouvant, grâce à la zone d'assouplissement axial et radial de la bride, absorber plus facilement les contraintes mécaniques (pression, efforts) et thermiques (basses températures, variations de températures).

D'autres avantages et caractéristiques de l'invention ressortiront à la lecture de la description suivante faite à titre d'exemple et en référence aux dessins annexés dans lesquels :
- la figure 1, déjà décrite, est une vue partielle en coupe du montage d'une bride de raccordement selon l'art antérieur,
- la figure 2 est une vue en perspective partielle d'un dispositif de dérivation entre une bride et un tuyau principal, en coupe selon un plan transversal par rapport au tuyau principal, selon la direction II-II de la figure 3,
- la figure 3 est une vue en perspective partielle du dispositif de dérivation de la figure 2, en coupe selon un plan longitudinal du tuyau principal, selon la direction III-III de la figure 2, et
- la figure 4 montre l'utilisation de deux brides de dérivation montées sur un tuyau principal de fort diamètre et servant d'entrée et de sortie à deux tubes en serpentin logés dans le tuyau principal, afin de former un autre dispositif de dérivation servant d'échangeur thermique.

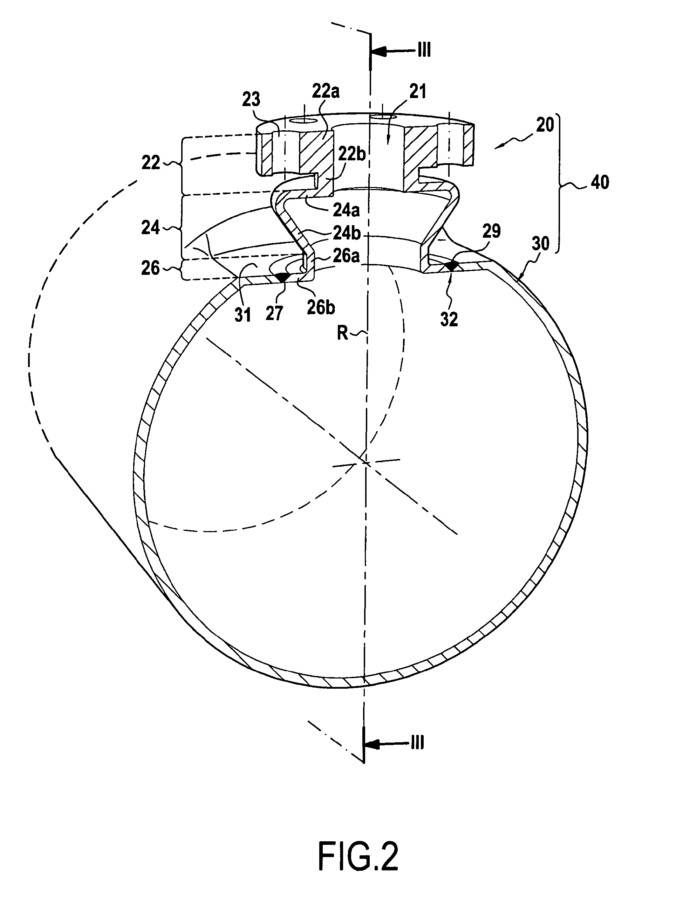

On se reporte maintenant aux figures 2 et 3 montrant deux vues en perspective d'un exemple de bride de dérivation 20 montée sur un tuyau principal 30, l'ensemble formant un dispositif de dérivation 40, respectivement en coupe en direction transversale et longitudinale du tuyau principal 30.

Le tuyau principal 30 a été localement percé et embouti selon une empreinte plane (zone plane 31) de sorte que sa paroi présente une ouverture circulaire plane 32 différente des ouvertures formant l'extrémité du tuyau principal 30, et de ce fait non coaxiale au tuyau principal 30.

La bride de dérivation 20 est une pièce de révolution autour d'un passage intérieur 21 coaxial avec l'axe de révolution R, qui se compose, selon sa direction axiale, d'un tronçon arrière 22 avec une platine de fixation 22a radiale munie de perçages 23 de fixation, d'un tronçon intermédiaire 24 et d'un tronçon avant 26 dont l'extrémité libre 27 présente un contour circulaire apte à être monté par soudage plan le long de l'ouverture circulaire 32 de la paroi du tuyau principal 30 (cordon de soudure 29 sur les figures 2 et 3).

Le tronçon arrière 22 comporte également une portion cylindrique 22b qui prolonge axialement la platine de fixation 22a.

Le tronçon intermédiaire 24 comprend une première paroi 24a et une deuxième paroi 24b formant entre elles un angle aigu en direction du passage intérieur 21.

D'une façon générale, la première paroi 24a et la deuxième paroi 24b forment entre elles un angle d'au plus 90°, et ceci afin de former un angle rentrant en regard du passage intérieur 21, ce qui permet de constituer la forme en pli de soufflet du tronçon intermédiaire 24.

Dans le cas de figure illustré, la première paroi 24a est une paroi annulaire s'étendant vers l'extérieur en direction radiale depuis le tronçon arrière et la deuxième paroi 24b forme un rétrécissement annulaire depuis la première paroi 24a du tronçon intermédiaire 24 en direction du tronçon avant 26, c'est-à-dire que le diamètre de la deuxième paroi 24b va en diminuant au fur et à mesure que l'on s'éloigne en direction axiale de la première paroi 24a.

Les expressions précitées « en direction radiale » et « en direction axiale » se rapportent respectivement à la direction orthogonale à l'axe de révolution R et à la direction de l'axe de révolution R de la bride de dérivation 20.

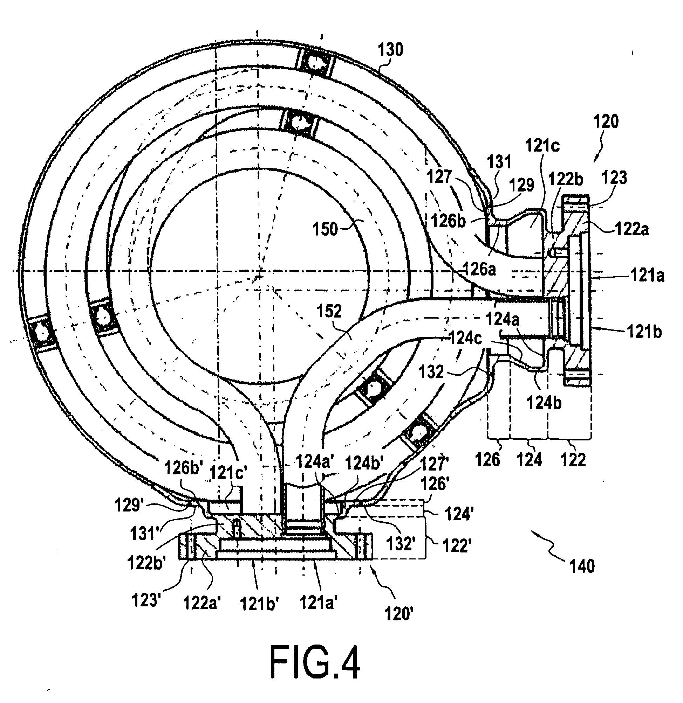

Selon une alternative ne faisant pas partie de la présente invention correspondant à la deuxième bride de dérivation 120' de la figure 4, la première paroi 24a reste une paroi annulaire s'étendant vers l'extérieur en direction radiale depuis le tronçon arrière mais la deuxième paroi est une paroi cylindrique (première paroi 124a' et deuxième paroi 124b' sur la figure 4).

Selon une autre alternative non représentée ne faisant pas partie de la présente invention, la première paroi du tronçon intermédiaire forme une paroi annulaire allant en s'élargissant depuis le tronçon arrière et la deuxième paroi forme un rétrécissement annulaire depuis la première paroi du tronçon intermédiaire en direction du tronçon avant, d'où la forme <> du tronçon intermédiaire 24 qui correspond à la forme classique du pli de soufflet.

Le tronçon avant 26 comporte, depuis le tronçon intermédiaire 24, une paroi cylindrique 26a et une paroi annulaire 26b s'étendant radialement autour de l'axe de révolution R, et dont le bord extérieur délimite l'extrémité libre 27 du tronçon avant 26 qui forme l'extrémité avant de la bride de dérivation 20, et qui est montée par soudage sur l'ouverture circulaire 32 du tuyau principal 30.

On conçoit que le tronçon avant 26 comporte uniquement la paroi annulaire 26b s'étendant radialement autour de l'axe de révolution R, cette paroi annulaire 26b prolongeant la deuxième paroi 24b du tronçon intermédiaire 24, que celle-ci soit constituée d'un rétrécissement annulaire ou d'une paroi cylindrique.

Les parois 24a et 24b du tronçon intermédiaire 24 et les parois 26a et 26b du tronçon avant 26 présentent une épaisseur sensiblement constante et égale à l'épaisseur de la paroi du tuyau principal 30. De cette façon, on réalise un soudage entre deux pièces de même épaisseur, entre l'ouverture circulaire 32 du tuyau principal 30 et le bord extérieur de l'extrémité libre 27 de la bride 20. D'autre part, la zone d'assouplissement axial et radial de la bride 20, constituée des tronçons intermédiaire 24 et avant 26, joue plus facilement son rôle car elle constitue une prolongation de matière de même épaisseur, donc sans rupture dimensionnelle, que la paroi de la zone plane 31 du tuyau principal 30.

On se reporte maintenant à la figure 4 représentant le dispositif de dérivation 140 selon l'invention comportant deux brides de dérivation 120 et 120', qui est utilisé dans un échangeur thermique chaud.

Dans ce cas, le tuyau principal 130 comporte une première et une deuxième ouvertures circulaires plans 132 et 132' disposées à 90° l'une de l'autre sur un même tronçon de dérivation du tuyau principal 130, à l'emplacement d'une première et d'une deuxième zones planes 131 et 131'.

Le dispositif de dérivation 140 comporte une première et une deuxième bride de dérivation 120 et 120', la première bride de dérivation 120 étant montée par soudage plan (cordon de soudure 129) le long de la première ouverture circulaire 132 et la deuxième bride de dérivation 120' étant montée par soudage plan (cordon de soudure 129') le long de la deuxième ouverture circulaire 132'.

La première bride de dérivation 120 et la deuxième bride de dérivation 120' comportent chacune un premier et un deuxième passages intérieurs axiaux 121a et 121b (121a' et 121b') pour le montage de deux tubes coudés 150 et 152 logés dans le tuyau principal 130.

Hormis le fait qu'elle comporte non pas un seul passage intérieur mais deux passages intérieurs 121a et 121b distincts et une différence liée au tronçon intermédiaire 124, la première bride de dérivation 120 est similaire à la bride de dérivation 20 des figures 2 et 3. II faut relever que les premier et deuxième passages intérieurs 121a et 121b sont séparés et traversent une portion cylindrique 122b pleine du tronçon arrière 122, et qu'ils débouchent dans un passage intérieur avant commun 121c au niveau du tronçon intermédiaire 124 et du tronçon avant 126.

Selon l'invention, cette première bride de dérivation 120 se compose, selon sa direction axiale, d'un tronçon arrière 122 avec une platine de fixation 122a radiale munie de perçages 123 et la portion cylindrique 122b, d'un tronçon intermédiaire 124 et d'un tronçon avant 126 dont l'extrémité libre 127 présente un contour circulaire apte à être monté par soudage plan le long de l'ouverture circulaire 132 de la paroi du tuyau principal 130

Le tronçon intermédiaire 124 se compose non pas de deux mais de trois parois.

Le tronçon intermédiaire 124 comprend une première paroi 124a et une deuxième paroi 124b formant entre elles un angle droit en direction du passage intérieur avant 121c, la première paroi 124a étant une paroi annulaire s'étendant vers l'extérieur en direction radiale depuis le tronçon arrière 122 et la deuxième paroi 124b prolongeant la première paroi 124a du tronçon intermédiaire 124 en formant une paroi cylindrique de révolution.

Le tronçon intermédiaire 124 comprend en outre une troisième paroi 124c formant un rétrécissement annulaire depuis la deuxième paroi 124b du tronçon intermédiaire 124 en direction du tronçon avant 126, la deuxième paroi 124b et la troisième paroi 124c formant entre elles un angle obtus en direction du passage intérieur avant 121c, de sorte que première paroi 124a et la troisième paroi 124c forment entre elles un angle aigu en direction du passage intérieur avant 121c.

Le tronçon avant 126 comporte, depuis le tronçon intermédiaire 124, une paroi cylindrique 126a et une paroi annulaire 126b s'étendant radialement, dont le bord extérieur délimite l'extrémité libre 127 de la première bride de dérivation 120, et qui est montée sur la première ouverture circulaire 132 du tuyau principal 130.

La deuxième bride de dérivation 120' se compose, selon sa direction axiale, d'un tronçon arrière 122' avec une platine de fixation 122a' radiale munie de perçages 123' et une portion cylindrique 122b', d'un tronçon intermédiaire 124' et d'un tronçon avant 126' dont l'extrémité libre 127' présente un contour circulaire apte à être monté par soudage plan le long de l'ouverture circulaire 132' de la paroi du tuyau principal 130.

Cependant, la deuxième bride de dérivation 120' présente, hormis la présence de deux passages intérieurs 121a' et 121b' traversant la portion cylindrique 122b' pleine du tronçon arrière 122', deux autres différences avec la bride de dérivation 20 des figures 2 et 3 :
- le tronçon intermédiaire 124' comprend une première paroi 124a' et une deuxième paroi 124b' formant entre elles un angle droit en direction du passage intérieur avant 121c', la première paroi 124a' étant une paroi annulaire s'étendant vers l'extérieur en direction radiale depuis le tronçon arrière 122' et la deuxième paroi 124b' formant depuis la première paroi 124a' du tronçon intermédiaire 124' une paroi cylindrique de révolution, et
- Le tronçon avant 126' comporte, depuis le tronçon intermédiaire 124 uniquement une paroi annulaire 126b' s'étendant radialement et dont le bord extérieur délimite l'extrémité libre 127' de la deuxième bride de dérivation 120', et qui est montée sur la deuxième ouverture circulaire 132' du tuyau principal 130'.

Ainsi, la première bride de dérivation 120 (la deuxième bride de dérivation 120') est une pièce de révolution s'agissant de sa surface extérieure, du tronçon intermédiaire 124 (124') et du tronçon avant 126 (126').

Le dispositif de dérivation 140 comporte en outre un premier tube coudé 150 et un deuxième tube coudé 152 disposés à l'intérieur du tuyau principal 130. Le premier tube coudé 150 forme un double serpentin reliant le premier passage intérieur 121a de la première bride de dérivation 120 au deuxième passage intérieur 121b' de la deuxième bride de dérivation 120'. Le deuxième tube coudé 152 relie le deuxième passage intérieur 121b de la première bride de dérivation 120 au premier passage intérieur 121a' de la deuxième bride de dérivation 120'.

Ainsi, le tronçon de dérivation du tuyau principal 130 visible sur la figure 4 forme un échangeur thermique entre un premier fluide s'écoulant dans le tuyau principal 130 et un deuxième fluide parcourant les premier et deuxième tubes coudés 150 et 152 via la première et la deuxième bride de dérivation 120, 120'.

D'une manière plus générale, la première bride de dérivation et la deuxième bride de dérivation 120, 120' peuvent comporter chacune au moins un premier et un deuxième passage intérieur axial (121a, 121b; 121a', 121b'), ce qui englobe des variantes avec plus de deux passages intérieurs axiaux dans le tronçon arrière 122, 122' de la première bride de dérivation et de la deuxième bride de dérivation 120, 120'. Egalement, de façon générale, le dispositif de dérivation comporte au moins un premier tube coudé (150) et un deuxième tube coudé (152) disposés à l'intérieur du tuyau principal (130) et qui se raccordent à l'un de ces passages intérieurs axiaux.

Dans le cas d'un échangeur chaud pour les applications astronautiques citées en introduction, par exemple le premier fluide (à réchauffer) est de l'hélium liquide à une température d'entrée de -263 °C et le deuxième fluide (source de chaleur) est un gaz issu de combustion à une température de l'ordre de 500 °C.

Selon l'invention, on propose aussi le procédé de raccordement par soudage entre au moins un tuyau principal 30 (ou 130) et au moins une bride de dérivation, caractérisé en ce qu'il comporte les étapes suivantes :
- on fournit un tuyau principal 30 (ou 130),
- on réalise une opération d'emboutissage par laquelle on aplatit et on perce la paroi du tuyau principal 30 (ou 130) à l'emplacement de la zone plane 31 (des zones planes 131 et 131'), ce par quoi on forme une ouverture circulaire plane 32 (132 et 132'),
- on fournit au moins une bride de dérivation 120 selon au moins la revendication 1 dont l'extrémité libre 127 présente un contour circulaire de même diamètre que le diamètre de l'ouverture circulaire plane 32 (132 et 132') du tuyau principal 30 (ou 130), et
- on réalise un soudage plan entre le contour de ladite ouverture circulaire 32 (132 et 132') de la paroi du tuyau principal 30 (ou 130) et l'extrémité libre 127 du tronçon avant 126.

Ainsi, on comprend que la zone plane 31 (les zones planes 131 et 131') du tuyau principal 30 (ou 130) n'a (n'ont) pas été amincie(s) comme dans le cas de l'étirement mis en oeuvre pour former le collet 16 de l'art antérieur (Figure 1).

Dans le cas de la bride de dérivation 20 des figures 2 et 3 ne faisant pas partie de l'invention, cette dernière permet de monter une tubulure sur une autre tubulure formant le tuyau principal 30 (raccordement entre deux tubulures situées de part et d'autre de la bride de dérivation 20).

Dans le cas des brides de dérivation 120 et 120' de la figure 4, il s'agit de monter trois tubulures (le tuyau principal 130, le premier tube coudé 150 et le deuxième tube coudé 152) d'un côté à deux tubulures (non représentées) situées de l'autre côté de la bride.

La présente invention ne se limite pas à ces deux cas de figure mais englobe d'autres situations de sorte que la bride de dérivation selon l'invention raccorde au moins une tubulure, voire plusieurs tubulures, à au moins une tubulure, voire plusieurs tubulures, au moyen d'un ou de plusieurs passages intérieurs.

## Revendications

1. Bride de dérivation (120) destinée à être raccordée à au moins un tuyau principal (130), présentant une surface extérieure de révolution et comportant au moins un passage intérieur (121a, 121b, 121c) axial, un tronçon arrière (122) avec une platine de fixation (122a), un tronçon intermédiaire (124) et un tronçon avant (126) dont l'extrémité libre (127) présente un contour circulaire apte à être monté par soudage plan le long d'une ouverture circulaire (132) de la paroi du tuyau principal (130), **caractérisée en ce que** ledit tronçon intermédiaire (124) comprend une première paroi (124a) annulaire s'étendant vers l'extérieur en direction radiale depuis le tronçon arrière (122), une deuxième paroi cylindrique de révolution (124b) prolongeant la première paroi (124a) et une troisième paroi (124c) formant un rétrécissement annulaire depuis la deuxième paroi (124b) du tronçon intermédiaire (124) en direction du tronçon avant (126), de sorte que la première paroi (124a) et la troisième paroi (124c) forment entre elles un angle aigu en direction du passage intérieur (121c), et **en ce que** ledit tronçon avant (126) comporte, depuis le tronçon intermédiaire (124), une paroi cylindrique (126a) et une paroi annulaire (126b) s'étendant radialement, dont le bord extérieur délimite l'extrémité libre (127) de la bride de dérivation (120), et qui est apte à être montée sur une ouverture circulaire (132) du tuyau principal (130).

2. Bride de dérivation (120) selon la revendication 1, **caractérisée en ce que** les parois du tronçon intermédiaire (124) et du tronçon avant (126) présentent une épaisseur sensiblement constante.

3. Dispositif de dérivation entre au moins un tuyau principal (130) et au moins un tuyau secondaire, comprenant :
- un tuyau principal (130) dont la paroi présente une première ouverture circulaire (132) plane non coaxiale au tuyau principale et au moins une première bride de dérivation (120) selon la revendication 1 ou 2,
l'extrémité libre (127) de ladite première bride de dérivation (120, ) présentant le même diamètre que le diamètre de l'ouverture du tuyau principal (130) et ladite extrémité libre (127) étant montée par soudage plan le long de ladite première ouverture circulaire ( 132).

4. Dispositif de dérivation selon la revendication 3, **caractérisé en ce que** les parois du tronçon intermédiaire (124) et du tronçon avant (126) présentent une épaisseur sensiblement constante et égale à l'épaisseur de la paroi du tuyau principal (130).

5. Dispositif de dérivation selon l'une quelconque des revendications 3 et 4, **caractérisé en ce que** le tuyau principal (130) comporte une deuxième ouverture (132') circulaire plane disposée à 90° de la première ouverture circulaire (132) sur un même tronçon de dérivation du tuyau principal (130), **en ce que** le dispositif comporte une deuxième bride de dérivation (120'), la première bride de dérivation (120) étant montée par soudage plan le long de la première ouverture circulaire (132) et la deuxième bride de dérivation (120') étant montée par soudage plan le long de la deuxième ouverture circulaire (132').

6. Dispositif de dérivation selon la revendication 5, **caractérisé en ce que** la première bride de dérivation et la deuxième bride de dérivation (120, 120') comportent chacune au moins un premier et un deuxième passage intérieur axial (121a, 121b; 121a', 121b'), **en ce que** le dispositif comporte en outre au moins un premier tube coudé (150) et un deuxième tube coudé (152) disposés à l'intérieur du tuyau principal (130), le premier tube coudé (150) reliant le premier passage intérieur (121a) de la première bride de dérivation (120) au deuxième passage intérieur (121b') de la deuxième bride de dérivation (120') et le deuxième tube coudé (152) reliant le deuxième passage intérieur (121b) de la première bride de dérivation (120) au premier passage intérieur (121a') de la deuxième bride de dérivation (120'), ce par quoi le tronçon de dérivation du tuyau principal (130) forme un échangeur thermique entre un premier fluide s'écoulant dans le tuyau principal (130) et un deuxième fluide parcourant les premier et deuxièmes tubes coudés (150, 152).

7. Dispositif de dérivation selon la revendication 6, **caractérisé en ce que** le premier tube coudé (150) forme un double serpentin.

8. Procédé de raccordement par soudage entre au moins un tuyau principal (30; 130) et au moins une bride de dérivation ( 120) selon la revendication 1 ou 2, **caractérisé en ce qu'**il comporte les étapes suivantes :
- on fournit un tuyau principal (30; 130),
- on réalise une opération d'emboutissage par laquelle on aplatit et on perce la paroi du tuyau principal (30; 130), ce par quoi on forme une ouverture circulaire (32; 132,132') plane,
- on fournit au moins la bride de dérivation (120) dont l'extrémité libre (127) présente un contour circulaire de même diamètre que le diamètre de l'ouverture du tuyau principal (30; 130) , et
- on réalise un soudage plan entre le contour de ladite ouverture circulaire (32; 132, 132') de la paroi du tuyau principal (30; 130) et l'extrémité libre (127) du tronçon avant (126) de la bride de dérivation (120).

## Claims

1. A branch connection stub (120) for connection to a main pipe (130), the stub presenting an outside surface of revolution and including at least one axial internal passage (121a, 121b, 121c), a rear segment (122) with a fastener flange (122a), an intermediate segment (124), and a front segment (126) having a free end (127) presenting a circular outline suitable for mounting by plane welding around a circular opening (132) in the wall of the main pipe (130), **characterized in that** said intermediate segment (124) comprises a first annular wall (124a) extending radially outwards from the rear segment (122), a second wall (124b) that is circularly cylindrical extending the first wall (124a), and a third wall (124c) forming an annular taper from the second wall (124b) of the intermediate segment (124) towards the front segment (126) so that the first wall (124a) and the third wall (124c) form between them an acute angle towards the internal passage (121c), and **in that**, going from the intermediate segment (124), said front segment (126) comprises a cylindrical wall (126a) and an annular wall (126b) extending radially, the outside edge thereof defining the free end (127) of the branch connection stub (120), and which can be mounted in a circular opening (132) of the main pipe (130).

2. A branch connection stub (20; 120, 120') according to claim 1, **characterized in that** the walls of the intermediate segment (24; 124, 124') and of the front segment (26; 126, 126') present thickness that is substantially constant.

3. A branch connection device between a main pipe (130) and a secondary pipe, the device comprising:
· a main pipe (130) having a wall presenting a first plane circular opening (132) that is not coaxial with the main pipe, and at least one first branch connection stub (120) according to claim 1 or 2, the free end (127) of said first branch connection stub (120) having the same diameter as the diameter of the opening in the main pipe (130) and said free end (127) being mounted by plane welding around said first circular opening (132).

4. A branch connection device according to claim 3, **characterized in that** the walls of the intermediate segment (124) and of the front segment (126) presents thickness that is substantially constant and equal to the thickness of the wall of the main pipe (130).

5. A branch connection device according to claim 3 or claim 4, **characterized in that** the main pipe (130) has a second plane circular opening (132') disposed at 90° to the first circular opening (132) on a common branch connection segment of the main pipe (130), and **in that** the device has a second branch connection stub (120'), the first branch connection stub (120) being mounted by plane welding around the first circular opening (132) and the second branch connection stub (120') being mounted by plane welding around the second circular opening (132').

6. A branch connection device according to claim 5, **characterized in that** each of the first and second branch connection stubs (120, 120') includes at least first and second axial internal passages (121a, 121b; 121a', 121b'), and **in that** the device further includes at least a first bent tube (150) and a second bent tube (152) disposed inside the main pipe (130), the first bent tube (150) connecting the first internal passage (121a) of the first branch connection stub (120) to the second internal passage (121b') of the second branch connection stub (120') and the second bent tube (152) connecting the second internal passage (121b) of the first branch connection stub (120) to the first internal passage (121a') of the second branch connection stub (120'), whereby the branch connection segment of the main pipe (130) forms a heat exchanger between a first fluid flowing in the main pipe (130) and a second fluid flowing in the first and second bent tubes (150, 152).

7. A branch connection device according to claim 6, **characterized in that** the first bent tube (150) forms a double coil.

8. A method of connecting together by welding a main pipe (30; 130) and at least one branch connection stub (120) according to claim 1 or 2, the method being **characterized in that** it comprises the following steps:
· providing a main pipe (30; 130);
· performing a stamping operation to flatten and pierce the wall of the main pipe (30; 130), thereby forming a plane circular opening (32; 132, 132');
· providing at least said branch connection stub (120) having a free end (127) presenting a circular outline of the same diameter as the diameter of the opening in the main pipe (30; 130); and
· performing plane welding between the outline of said circular opening (32; 132, 132') in the wall of the main pipe (30; 130) and the free end (127) of the front segment (126) of the branch connection stub (120).

## Patentansprüche

1. Abzweigflansch (120), der dazu bestimmt ist, an wenigstens ein Hauptrohr (130) angeschlossen zu werden, der eine Rotationsaußenfläche aufweist und wenigstens einen axialen Innendurchgang (121a, 121b, 121c), einen hinteren Abschnitt (122) mit einer Befestigungsplatte (122a), einen Zwischenabschnitt (124) sowie einen vorderen Abschnitt (126) umfaßt, dessen freies Ende (127) eine kreisförmige Kontur aufweist, die geeignet ist, durch Planschweißen entlang einer kreisförmigen Öffnung (132) der Wand des Hauptrohrs (130) angebracht zu werden, **dadurch gekennzeichnet, daß** der Zwischenabschnitt (124) eine ringförmige erste Wand (124a), die in radialer Richtung von dem hinteren Abschnitt (122) nach außen verläuft, eine rotationszylindrische zweite Wand (124b), welche die erste Wand (124a) fortsetzt, sowie eine dritte Wand (124c) umfaßt, die eine ringförmige Einschnürung von der zweiten Wand (124b) des Zwischenabschnitts (124) aus, in Richtung des vorderen Abschnitts (126) bildet, so daß die erste Wand (124a) und die dritte Wand (124c) zwischen sich einen spitzen Winkel in Richtung des Innendurchgangs (121c) bilden, und **dadurch**, daß der vordere Abschnitt (126) von dem Zwischenabschnitt (124) aus, eine zylindrische Wand (126a) und eine radial verlaufende ringförmige Wand (126b) umfaßt, deren Außenkante das freie Ende (127) des Abzweigflansches (120) begrenzt und die geeignet ist, an einer kreisförmigen Öffnung (132) des Hauptrohrs (130) angebracht zu werden.

2. Abzweigflansch (120) nach Anspruch 1, **dadurch gekennzeichnet, daß** die Wände des Zwischenabschnitts (124) und des vorderen Abschnitts (126) eine im wesentlichen konstante Dicke aufweisen.

3. Abzweigvorrichtung zwischen wenigstens einem Hauptrohr (130) und wenigstens einem Nebenrohr, umfassend:
- ein Hauptrohr (130), dessen Wand eine erste ebene, zu dem Hauptrohr nicht koaxiale, kreisförmige Öffnung (132) aufweist, sowie wenigstens einen ersten Abzweigflansch (120) nach Anspruch 1 oder 2,
wobei das freie Ende (127) des ersten Abzweigflansches (120) den gleichen Durchmesser wie die Öffnung des Hauptrohrs (130) aufweist und das freie Ende (127) durch Planschweißen entlang der ersten kreisförmigen Öffnung (132) angebracht ist.

4. Abzweigvorrichtung nach Anspruch 3, **dadurch gekennzeichnet, daß** die Wände des Zwischenabschnitts (124) und des vorderen Abschnitts (126) eine Dicke aufweisen, die im wesentlichen konstant und gleich der Dicke der Wand des Hauptrohrs (130) ist.

5. Abzweigvorrichtung nach einem der Ansprüche 3 und 4, **dadurch gekennzeichnet, daß** das Hauptrohr (130) eine zweite ebene, kreisförmige Öffnung (132') aufweist, die um 90° von der ersten kreisförmigen Öffnung (132) an einem gleichen Abzweigabschnitt des Hauptrohrs (130) angeordnet ist, daß die Vorrichtung einen zweiten Abzweigflansch (120') umfaßt, wobei der erste Abzweigflansch (120) durch Planschweißen entlang der ersten kreisförmigen Öffnung (132) und der zweite Abzweigflansch (120') durch Planschweißen entlang der zweiten kreisförmigen Öffnung (132') angebracht ist.

6. Abzweigvorrichtung nach Anspruch 5, **dadurch gekennzeichnet, daß** der erste Abzweigflansch und der zweite Abzweigflansch (120, 120') jeweils wenigstens einen ersten und einen zweiten axialen Innendurchgang (121a, 121b; 121a', 121b') umfassen, daß die Vorrichtung ferner wenigstens ein erstes Bogenrohr (150) und ein zweites Bogenrohr (152) umfaßt, die innerhalb des Hauptrohrs (130) angeordnet sind, wobei das erste Bogenrohr (150) den ersten Innendurchgang (121a) des ersten Abzweigflansches (120) mit dem zweiten Innendurchgang (121b') des zweiten Abzweigflansches (120') verbindet und das zweite Bogenrohr (152) den zweiten Innendurchgang (121b) des ersten Abzweigflansches (120) mit dem ersten Innendurchgang (121a') des zweiten Abzweigflansches (120') verbindet, wodurch der Abzweigabschnitt des Hauptrohrs (130) einen Wärmetauscher zwischen einem in dem Hauptrohr (130) strömenden ersten Fluid und einem das erste und das zweite Bogenrohr (150, 152) durchlaufenden zweiten Fluid bildet.

7. Abzweigvorrichtung nach Anspruch 6, **dadurch gekennzeichnet, daß** das erste Bogenrohr (150) eine doppelte Rohrschlange bildet.

8. Verfahren zur Schweißverbindung zwischen wenigstens einem Hauptrohr (30; 130) und wenigstens einem Abzweigflansch (120) nach Anspruch 1 oder 2, **dadurch gekennzeichnet, daß** es die folgenden Schritte umfaßt:
- Bereitstellen eines Hauptrohrs (30; 130),
- Durchführen eines Tiefziehvorganges, durch den die Wand des Hauptrohrs (30; 130) abgeflacht und durchbohrt wird, wodurch eine ebene, kreisförmige Öffnung (32; 132, 132') gebildet wird,
- Bereitstellen wenigstens des Abzweigflansches (120), dessen freies Ende (127) eine kreisförmige Kontur mit gleichem Durchmesser wie die Öffnung des Hauptrohrs (30; 130) aufweist, und
- Durchführen eines Planschweißens zwischen der Kontur der kreisförmigen Öffnung (32; 132, 132') der Wand des Hauptrohrs (30; 130) und dem freien Ende (127) des vorderen Abschnitts (126) des Abzweigflansches (120).
